# EUROPEAN PATENT SPECIFICATION

(11) **EP 0 506 210 B1**
(45) Date of publication and mention of the grant of the patent: **04.12.1996**
(21) Application number: 92201719.9
(22) Date of filing: 11.06.1987
(51) Int. Cl.: A01C 15/00, A01C 7/08, A01C 15/04

(54) **A device for spreading material**
Streuer
Epandeur

(30) Priority: 13.06.1986 NL 8601529
(43) Date of publication of application: 30.09.1992
(62) Divisional of application: 87201103.6
(73) Proprietor: C. van der Lely N.V., NL-3155 PD Maasland (NL)
(72) Inventor: van der Lely, Ary, NL-3155 PD Maasland (NL); Bom, Cornelis Johannes Gerardus, NL-3181 VC Rozenburg (NL)
(74) Representative: Mulder, Herman

(56) References cited:
- CA-A- 1 060 720
- CH-A- 445 177
- DE-A- 3 540 198
- FR-A- 1 558 490
- POWER FARMING August 1985, page 26;

## Description

The invention relates to a combination of a tractor and a device for spreading material or the like, comprising a first hopper for the material, a frame having connecting means by which the device can be coupled to the tractor, a further hopper separated from the first hopper and a transport element which is present between the further hopper and the first hopper for feeding, during operation of the device, material from said further hopper to said first hopper, transport means being provided near the further hopper to transport the material from the further hopper via the transport element to the first hopper, whereas the transport means near said further hopper encloses a fan means to produce an air stream capable of conveying material from the further hopper to said first hopper, the further hopper being coupled in front of the tractor by which the device for spreading the material is pulled.

A machine provided with two hoppers interconnected with a transport element is known from DE-A-35 40 198.

It is the aim of the invention to provide a combination which is able to cultivate and seed a large area of ground without the need to fill the device for spreading the seed material and whereby the different parts of the combination are in a good relation to one another to be moved in a favourable way over the area of ground.

According to the invention, this can be achieved when the device for spreading the material is a seed drill which is provided with the first hopper, and between said tractor and said device a power-driven rotary harrow is arranged coupled to the threepoint linkage of the tractor and the device for spreading seed material or the like is coupled with said rotary harrow, and whereby said first hopper is connected to and arranged substantially behind said cultivating machine and is, during use, supported on its own groundsupporting means.

For a better understanding of the invention and to show how the same may be carried into effect, some embodiments of a seed drill will now be described with reference to the accompanying drawings, in which:
Figure 1 is a side view of a seed drill coupled to a tractor;
Figure 2 is a side view of the seed drill in the non-operative position;
Figure 3 is a rear view of the seed drill in the non-operative position;
Figure 4 is a side view of part of the seed drill of Figures 1, 2 and 3;
Figure 5 is a plan view of the part of the seed drill shown in Figure 4;
Figure 6 is a plan view in accordance with that of Figure 5;
Figure 7 is a side view of a seed drill combination coupled to a tractor;
Figure 8 is a side view of a tractor with seed drill, and
Figure 9 is a view of a detail taken in the direction of the arrow IX in Figure 8.

In the drawings, which are only a schematical illustration of the embodiments, corresponding parts are denoted by the same reference numerals.

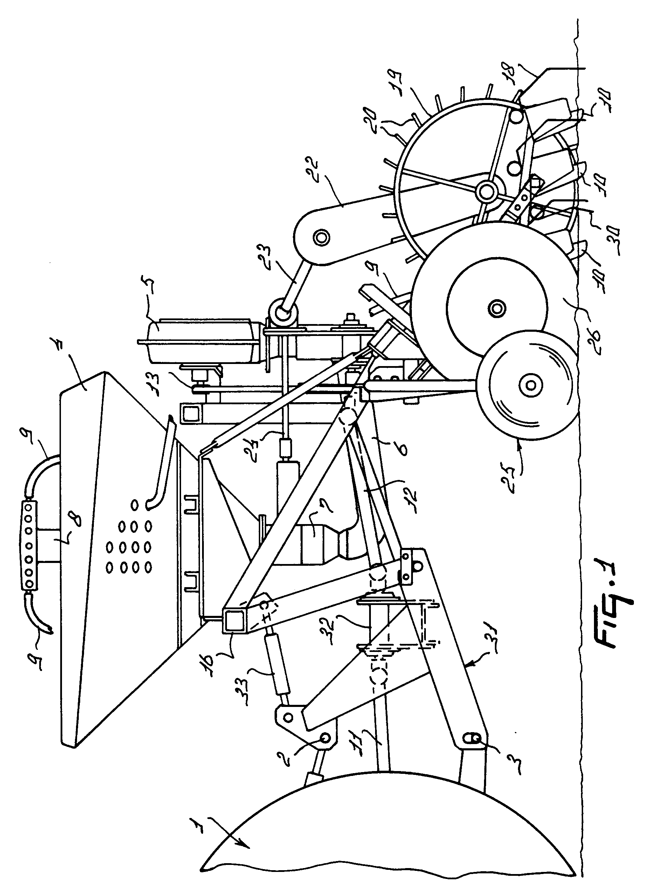

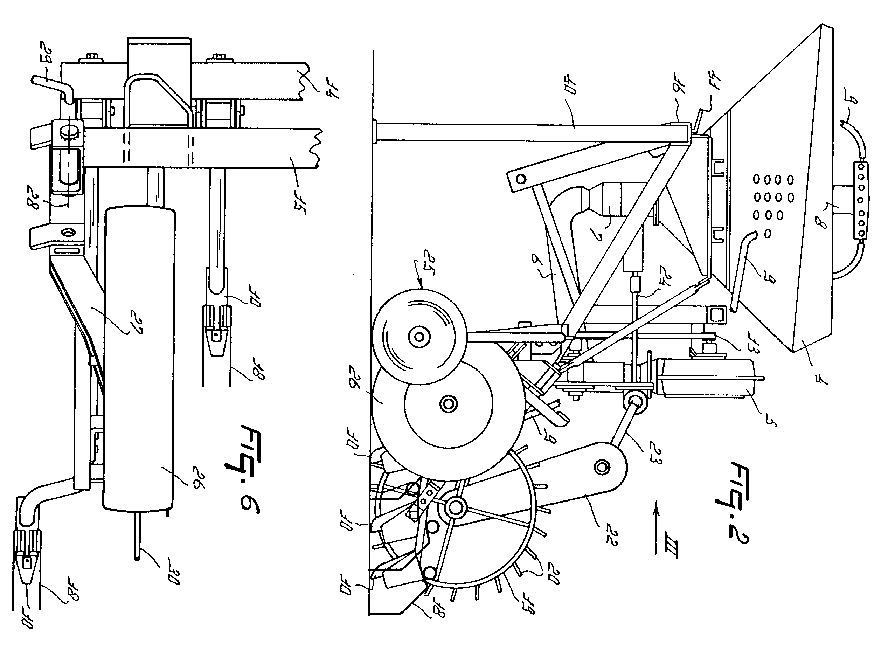

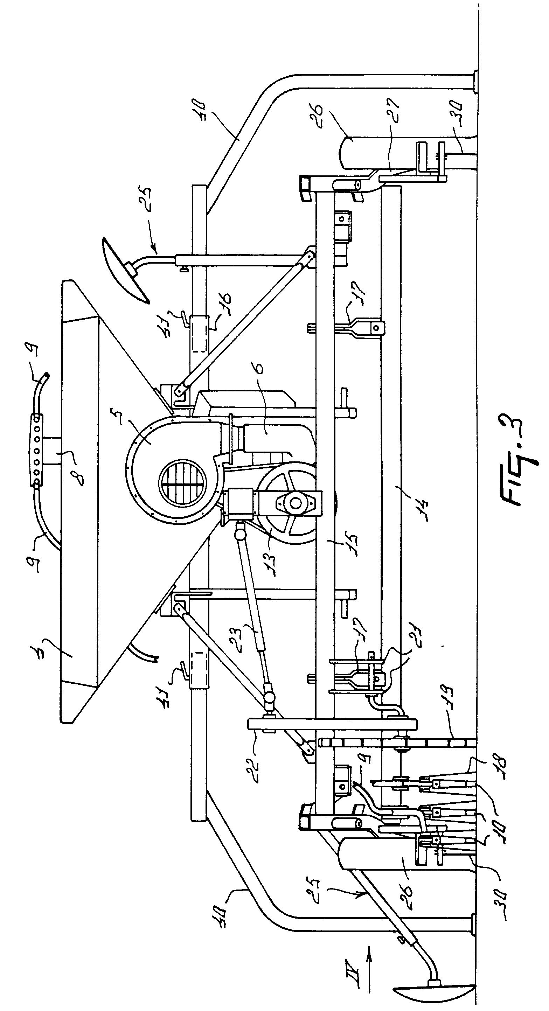

Figure 1 shows a tractor 1 of which only the rear side is shown, which tractor includes a three-point lifting hitch comprising an upper coupling member 2 and two lower coupling members 3, to which members the seed drill is connected.

The seed drill includes a hopper 4 in which the seed material may be contained. Air is blown to the doser 7 via the air duct 6 by means of a fan 5, whereafter the seed-air mixture is conveyed via channel 8 and the seed tubes 9 to the drill coulters 10. The fan 5 is driven by the power take-off shaft of the tractor 1 via the intermediate shafts 11 and 12 and the belt transmission 13.

The hopper 4 is supported in a frame, the beams 14, 15 and 16 of which extend transversely. As is apparent from Figure 3, the drill coulters 10 are mounted on beam 14, which beam 14 is connected to beam 15 by means of supports 17. The drill coulters 10 are provided over the entire length of beam 14, although Figure 3 shows only a few thereof. The drill coulters 10 are provided with seed material via seed tubes 9, which are only shown in part, which drill coulters are furthermore fitted with spring-loaded tines 18 for smoothing the soil.

The drive of doser 7 includes a running wheel 19 comprising soil-engaging spikes 20, by means of which the running wheel 19 rotates in dependence on the forward motion of the seed drill. The running wheel 19 is connected to beam 15 of the frame via the supports 21. The rotary motion of running wheel 19 is transferred to the doser 7 by means of a chain transmission 22 and drive rods 23 and 24. By means of this drive the doser 7 conveys seed material to the air stream generated by the fan 5, the quantity of seed material depending on the rate of travel of the seed drill.

In addition, the seed drill is provided at both sides with a marker 25, which can be hinged downwardly or upwardly depending on the needs, as is shown in Figure 3.

Furthermore, the seed drill is provided at both sides with a supporting wheel 26, by means of which the seed drill can bear on the soil during operation. As is apparent from Figure 3, the supporting wheels 26 constitute the outer-most parts of the seed drill. Consequently, it is possible, during transportation, to restrict the total width of the seed drill by folding up said supporting wheels 26. During transportation, the supporting wheels 26 do not serve any purpose, as the seed drill is then supported by the three-point lifting hitch of the tractor only.

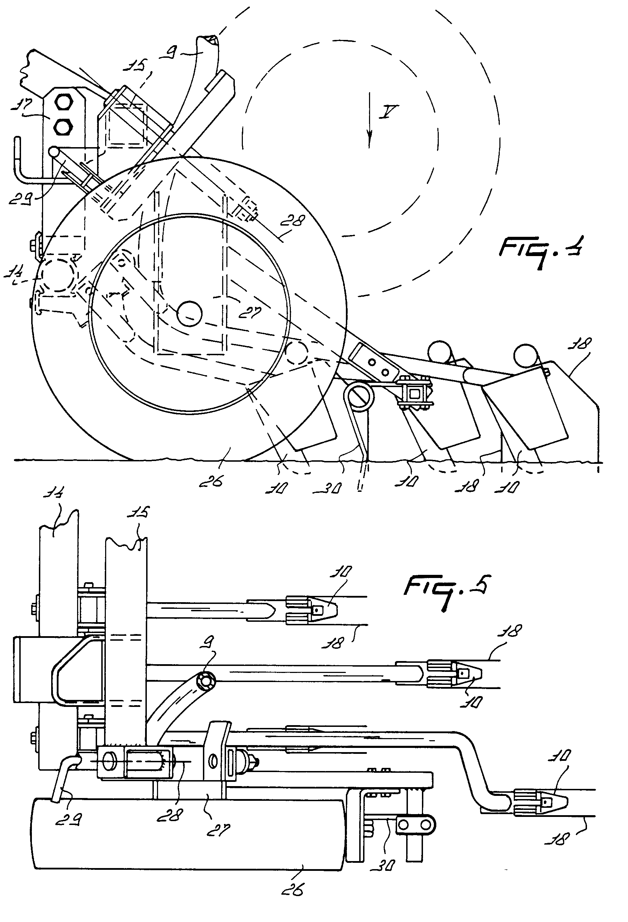

In order to allow the supporting wheels 26 to hinge upwardly, the support 27 of each supporting wheel 26 is pivotable about a pivot axis 28 indicated in Figure 4 by a dash-and-dot line. The hinged-up position of supporting wheel 26 is denoted in Figure 4 by means of a broken line. The supporting wheel 26 can be locked in the operative position or in the hinged-up position by means of a locking pin 29. Since the pivot axis 28 extends obliquely forwardly, is provided spaced above the centre line of the non-hinged up supporting wheel 26 and is located at the inner side thereof, said supporting wheel can be hinged upwardly to an advantageous position within the seed drill width. The tines 30 arranged behind the supporting wheel 26 for deleting the tyre track are fitted to the support 27, so that said tines 30 can be hinged upwardly along with the supporting wheel.

Figure 1 shows a seed drill which is connected to the three-point lifting hitch 2, 3 of the tractor 1 via an intermediate trestle 31. The intermediate trestle 31 has an intermediate bearing 32, on both sides of which an intermediate shaft 11, 12 can be coupled. The position of the seed drill can be set by means of a threaded spindle 33 of said intermediate trestle.

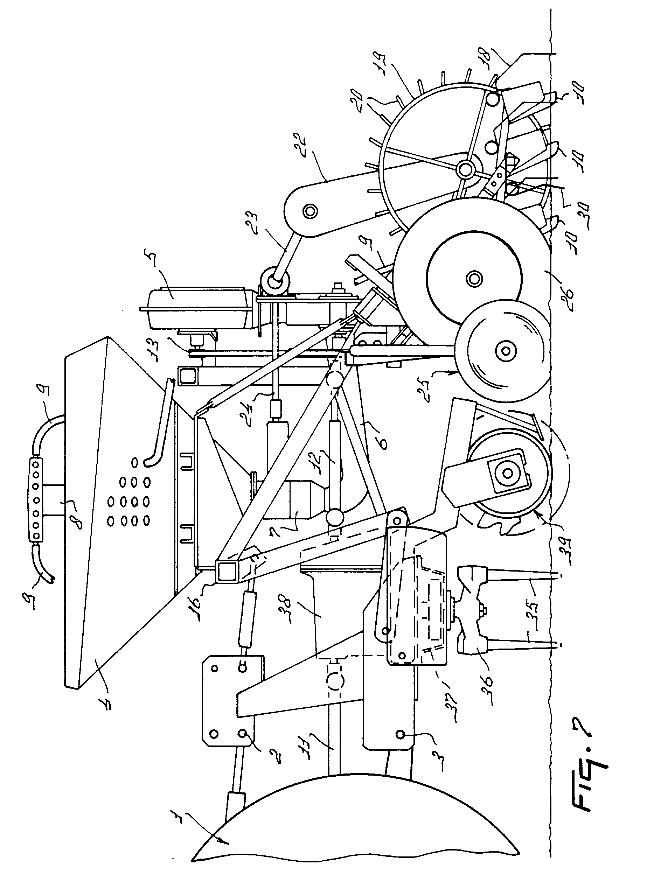

When the seed drill forms part of a seed drill combination as shown in Figure 7, a soil cultivating machine, e.g. a power-driven rotary harrow, may be substituted for said intermediate trestle 31. The rotary harrow shown in Figure 7 comprises a plurality of adjacent tines 35 which rotate about vertical axes and whose carriers 36 are bearing-supported in a housing 37 accommodating the tine drive. As is apparent from the drawing, the gear transmission box 38 of the rotary harrow is driven by intermediate shaft 11, whilst the intermediate shaft 12 is coupled to an outgoing shaft of the gear transmission box 38. In addition, Figure 7 shows a packer roller 39 which conditions the soil cultivated by the harrow tines 35.

Figure 2 shows the seed drill in its resting position, that is to say the position the seed drill may be in when it is not coupled to the tractor. In said resting position the seed drill is kept in the appropriate position because it bears on the supporting wheels 26 and on supporting pillars 40, one end of which can be inserted into the beam 16 and the other end can bear on the soil. The supporting pillars 40 can be locked in the beam 16 by means of the locking pins 41.

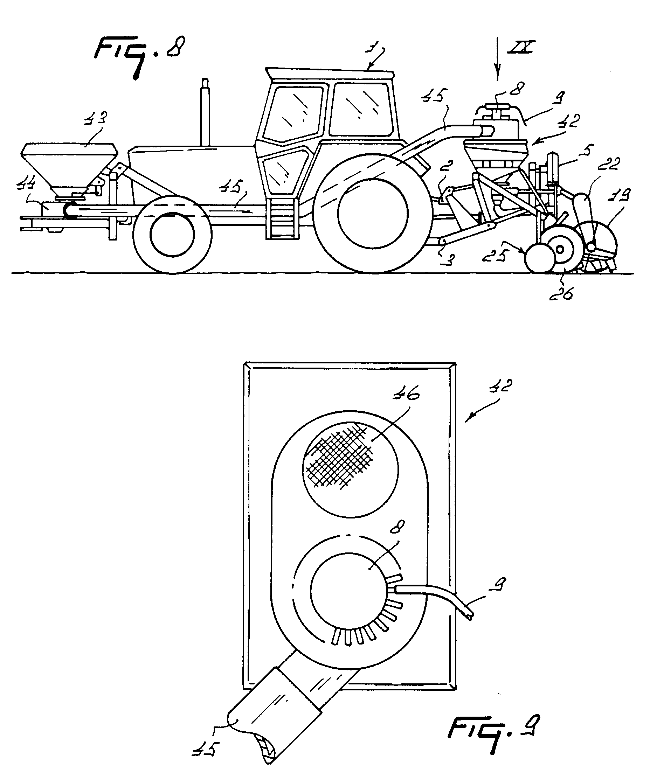

In the embodiment shown in the Figures 8 and 9, a tractor is provided at its rear side with a seed drill as shown in Figure 1, the hopper being replaced, however, by a smaller storage bin 42. The large hopper 43 is disposed at the front side of the tractor, which results in an improved weight distribution. The hopper 43 has a, for example, hydraulically driven fan 44. Fan 44 can produce an air stream capable of conveying the seed material from the hopper 43 to the storage bin 42 via seed pipe 45. Figure 9 is a plan view of the storage bin 42, in which figure reference numeral 46 denotes a filter through which the air supplied via the pipe 45 can flow away. The seed material then stays behind in the storage bin 42, to be fed from there to the drill coulters via channel 8 and seed tubes 9.

The supply of seed material from hopper 43 to storage bin 42 may be a continuous process. Alternatively, it is possible to switch on the supply of seed material each time when the amount thereof in the storage bin 42 has decreased to below a specific level. To that end the storage bin 42 may be provided with a level detector.

## Claims

1. A combination of a tractor and a device for spreading material or the like, comprising a first hopper (42) for the material, a frame having connecting means by which the device can be coupled to the tractor, a further hopper (43) separated from the first hopper (42) and a transport element (45) which is present between the further hopper (43) and the first hopper (42) for feeding, during operation of the device, material from said further hopper to said first hopper, transport means being provided near the further hopper to transport the material from the further hopper via the transport element to the first hopper, whereas the transport means near said further hopper encloses a fan means (44) to produce an air stream capable of conveying material from the further hopper (43) to said first hopper (42), the further hopper (43) being coupled in front of the tractor (1) by which the device for spreading the material is pulled, characterized in that the device for spreading the material is a seed drill which is provided with the first hopper, and in that between said tractor and said device a power-driven rotary harrow is arranged coupled to the threepoint linkage of the tractor and in that the device for spreading seed material or the like is coupled with said rotary harrow, and wherein said first hopper (42) is connected to and arranged substantially behind said cultivating machine and is, during use, supported on its own groundsupporting means (26).

2. A device as claimed in claim 1, characterized in that the first hopper (42) comprises a filter (46) through which the air supplied via the transport element (45) to the first hopper (42) can flow away.

3. A device as claimed in claim 1 or 2, characterized in that the first hopper provides dosing means (7) via which material is transported from the first hopper (42) to the coulters (10).

4. A device as claimed in claim 3, characterized in that the material is conveyed from the first hopper (42) to the coulters via tubes (9) by air produced by a fan means (5) near the first hopper (42).

## Patentansprüche

1. Kombination aus einem Schlepper und einem Gerät zum Ausbringen von Gut oder dergleichen, mit einem ersten Vorratsbehälter (42) für das Gut, einem Rahmen mit Anschlüssen zum Anschließen des Gerätes an den Schlepper, einem weiteren Vorratsbehälter (43), der von dem ersten Vorratsbehälter (42) getrennt ist, und einem zwischen dem weiteren Vorratsbehälter (43) und dem ersten Vorratsbehälter (42) angeordneten Förderelement (45), um im Betrieb des Gerätes Gut aus dem weiteren Vorratsbehälter dem ersten Vorratsbehälter zuzuführen, wobei nahe dem weiteren Vorratsbehälter eine Fördervorrichtung vorgesehen ist, um das Gut aus dem weiteren Vorratsbehälter über das Förderelement dem ersten Vorratsbehälter zuzuführen, wobei die nahe dem weiteren Vorratsbehälter angeordnete Fördervorrichtung ein Gebläse (44) aufweist, das einen Luftstrom zum Zuführen von Gut aus dem weiteren Vorratsbehälter (43) zu dem ersten Vorratsbehälter (42) erzeugt, und wobei der weitere Vorratsbehälter (43) an der Vorderseite des Schleppers (1) angeordnet ist, von dem das Gerät zum Ausbringen von Gut gezogen wird,
dadurch gekennzeichnet, daß das Gerät zum Ausbringen von Gut eine Drillmaschine ist, die mit dem ersten Vorratsbehälter versehen ist, daß zwischen dem Schlepper und dem Gerät eine angetriebene Kreiselegge angeordnet ist, die an das Dreipunkt-Gestänge des Schleppers angeschlossen ist, und daß das Gerät zum Ausbringen von Saatgut oder dergleichen mit der Kreiselegge gekuppelt ist, wobei der erste Vorratsbehälter (42) mit der Bodenbearbeitungsmaschine verbunden und im wesentlichen hinter ihr angeordnet und im Betrieb auf seiner eigenen Bodenstütze (26) abgestützt ist.

2. Gerät nach Anspruch 1,
dadurch gekennzeichnet, daß der erste Vorratsbehälter (42) einen Filter (46) aufweist, durch den hindurch die dem ersten Vorratsbehälter (42) über das Förderelement (45) zugeführte Luft abströmen kann.

3. Gerät nach Anspruch 1 oder 2,
dadurch gekennzeichnet, daß der erste Vorratsbehälter einen Dosierer (7) aufweist, über den Gut aus dem ersten Vorratsbehälter (42) den Scharen (10) zugeführt wird.

4. Gerät nach Anspruch 3,
dadurch gekennzeichnet, daß das Gut aus dem ersten Vorratsbehälter (42) den Scharen über Rohre (9) mittels Luft zugeführt wird, die von einem nahe dem ersten Vorratsbehälter (42) angeordneten Gebläse (5) erzeugt wird.

## Revendications

1. Combinaison d'un tracteur et d'un dispositif pour épandre de la matière ou similaire, comprenant une première trémie (42) pour la matière, un châssis ayant des moyens de liaison par lesquels le dispositif peut être couplé au tracteur, une autre trémie (43) séparée de la première trémie (42) et un élément de transport (45) qui est présent entre l'autre trémie (43) et la première trémie (42) pour débiter, pendant le travail du dispositif, de la matière à partir de ladite autre trémie à ladite première trémie, un moyen de transport étant prévu près de l'autre trémie pour transporter la matière de l'autre trémie vers la première trémie par l'intermédiaire de l'élément de transport, tandis que le moyen de transport comporte, près de ladite autre trémie, un moyen à ventilateur (44) pour produire un courant d'air capable de transporter de la matière à partir de l'autre trémie (43) à ladite première trémie (42), l'autre trémie (43) étant couplée à l'avant du tracteur (1) remorquant le dispositif pour épandre la matière,
**caractérisée** en ce que le dispositif pour épandre la matière est un semoir qui est muni de la première trémie, et en ce qu'il est disposé entre ledit tracteur et ledit dispositif une herse rotative motorisée, couplée à l'attelage à trois points du tracteur, et en ce que le dispositif pour épandre des semences ou similaires est couplé à ladite herse rotative, et dans laquelle ladite première trémie (42) est reliée à ladite machine cultivante et est disposée substantiellement derrière celle-ci et est supportée, pendant son utilisation, sur ses propres moyens de support au sol (26).

2. Dispositif selon la revendication 1, caractérisé en ce que la première trémie (42) comprend un filtre (46) à travers lequel l'air débité à travers l'élément de transport (45) vers la première trémie (42) peut s'évacuer.

3. Dispositif selon la revendication 1 ou 2, caractérisé en ce que la première trémie comporte un moyen doseur (7) à travers lequel de la matière est transportée de la première trémie (42) aux coutres (10).

4. Dispositif selon la revendication 3, caractérisé en ce que la matière est transportée aux coutres à partir de la première trémie (42) à travers des tubes (9) par de l'air produit par un moyen à ventilateur (5) près de la première trémie (42).
